(19) Europäisches Patentamt
European Patent Office
Office européen des brevets

(11) **EP 3 021 614 A1**

(12) **EUROPEAN PATENT APPLICATION**
published in accordance with Art. 153(4) EPC

(43) Date of publication:
**18.05.2016 Bulletin 2016/20**

(51) Int Cl.:
***H04W 48/08*** (2009.01)    ***H04W 52/04*** (2009.01)

(21) Application number: **14822573.3**

(22) Date of filing: **14.07.2014**

(86) International application number:
**PCT/KR2014/006335**

(87) International publication number:
**WO 2015/005751 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2013   KR 20130082176**

(71) Applicant: **Samsung Electronics Co., Ltd.**
**Suwon-si, Gyeonggi-do 443-742 (KR)**

(72) Inventors:
• **KWAK, Yongjun**
**Yongin-si**
**Gyeonggi-do 448-785 (KR)**
• **JI, Hyoungju**
**Seoul 138-910 (KR)**
• **JEONG, Kyeongin**
**Yongin-si**
**Gyeonggi-do 446-707 (KR)**
• **CHOI, Seunghoon**
**Suwon-si**
**Gyeonggi-do 443-280 (KR)**

(74) Representative: **Nederlandsch Octrooibureau**
**P.O. Box 29720**
**2502 LS The Hague (NL)**

(54) **METHOD AND DEVICE FOR TRANSMITTING DEVICE-TO-DEVICE DISCOVERY SIGNAL OF TERMINAL BETWEEN BASE STATIONS IN WIRELESS CELLULAR COMMUNICATION SYSTEM**

(57)    The present invention relates to a method and a device for transmitting a device-to-device discovery signal of a terminal between base stations in a wireless cellular communication system, and the method for transmitting a signal of a base station in a wireless communication system that supports device-to-device communication, according to the present invention, comprises the steps of: acquiring neighboring base station-related information on a base station neighboring the base station; and transmitting the acquired neighboring base station-related information to a terminal so as to control the transmission power for a discovery signal of the terminal.

FIG. 2

## Description

## Technical Field

The present invention relates to a wireless mobile communication system. More particularly, the present invention relates to a UE operation including transmission power control and multiplexing procedures of UE in a state where device-to-device communication technology and wireless cellular communication technology are used together, to a corresponding eNB operation, and to such devices involved therein.

## Background Art

With the advent of a great variety of services using a wireless mobile communication system, new technology for more effectively supporting such services is increasingly required. Therefore, new methods and technologies are now being developed and studied in wireless mobile communication systems.

Device-to-device (D2D) communication which is new technology introduced as a solution to new services inherently allows user equipment (UE) to perform direct communication with other neighboring UE. Using D2D communication technology, UE can perform a discovery operation of finding neighboring UE and a direct communication operation of directly communicating with such UE.

D2D communication uses a relatively smaller amount of wireless resources than typical communication using evolved node B (eNB) in a typical wireless network, thus having a great advantage in view of wireless resource efficiency. Additionally, since a method for finding any neighboring UE is supported, UE can directly offer necessary information to desired UE and hence considerably increase efficiency in supporting an advertisement service, a social networking service (SNS), and the like. Currently a long term evolution - advanced (LTE-A) system also requires the support for D2D technology, and related technical matters are now under discussion.

Furthermore, in the case where D2D communication technology and wireless cellular communication technology are used together, a problem of degrading the receiving sensitivity of D2D UE and of cellular UE in the system may arise. Therefore, related research is now required.

## Disclosure of Invention

## Technical Problem

The present invention is intended to solve the above-discussed issues and to provide a power control procedure for a D2D channel required for performing communication without degrading the receiving sensitivity of D2D UE and of cellular UE in a mobile communication system, provide a procedure for transmitting simultaneously D2D data and cellular data by single UE, and provide operating methods and apparatus of eNB and UE for supporting the above procedures.

## Solution to Problem

In order to solve the above issues, according to the present invention, a signal transmission method of eNB in a wireless communication system that supports D2D communication includes steps of obtaining neighboring eNB-related information about a neighboring eNB adjacent to the eNB, and controlling transmission power for a discovery signal of UE by transmitting the obtained neighboring eNB-related information to the UE.

Additionally, according to the present invention, a discovery signal transmission power control method of UE in a wireless communication system that supports D2D communication includes steps of receiving neighboring eNB-related information from eNB, determining whether a neighboring eNB is detected, if the neighboring eNB is detected, determining whether subframe used by the neighboring eNB is defined as cellular communication subframe at the same time as subframe for transmitting a discovery signal based on the neighboring eNB-related information, and if defined as the cellular communication subframe, controlling transmission power of the discovery signal.

Additionally, according to the present invention, a discovery signal transmission power control method of UE in a wireless communication system that supports D2D communication includes steps of determining whether a neighboring eNB is detected, if detected, receiving D2D communication related information from the neighboring eNB, determining whether subframe used by the neighboring eNB is defined as cellular communication subframe at the same time as subframe for transmitting a discovery signal based on the received D2D communication related information, and if defined as the cellular communication subframe, controlling transmission power of the discovery signal.

Additionally, according to the present invention, a discovery signal transmission method of UE in a wireless communication system that supports D2D communication includes steps of receiving serving eNB-related information from a serving eNB of the UE, receiving neighboring eNB-related information from a neighboring eNB of the UE, determining whether D2D communication subframe of the serving eNB and D2D communication subframe of the neighboring eNB are overlapped with each other, based on the serving eNB-related information and the neighboring eNB-related information, and if overlapped, transmitting a discovery signal at an overlap section.

Additionally, according to the present invention, eNB for transmitting a signal in a wireless communication system that supports D2D communication includes a transceiver unit configured to transmit and receive a signal to and from UE or a neighboring eNB adjacent to the eNB, and a control unit configured to obtain neighboring eNB-related information about the neighboring eNB, and to control transmission power for a discovery signal of UE by transmitting the obtained neighboring eNB-related information to the UE.

Additionally, according to the present invention, UE for controlling discovery signal transmission power in a wireless communication system that supports D2D communication includes a transceiver unit configured to transmit and receive a signal to and from eNB, and a control unit configured to receive neighboring eNB-related information from eNB, to determine whether a neighboring eNB is detected, if the neighboring eNB is detected, to determine whether subframe used by the neighboring eNB is defined as cellular communication subframe at the same time as subframe for transmitting a discovery signal based on the neighboring eNB-related information, and if defined as the cellular communication subframe, to control transmission power of the discovery signal.

Additionally, according to the present invention, UE for controlling discovery signal transmission power in a wireless communication system that supports D2D communication includes a transceiver unit configured to transmit and receive a signal to and from eNB, and a control unit configured to determine whether a neighboring eNB is detected, if detected, to receive D2D communication related information from the neighboring eNB, to determine whether subframe used by the neighboring eNB is defined as cellular communication subframe at the same time as subframe for transmitting a discovery signal based on the received D2D communication related information, and if defined as the cellular communication subframe, to control transmission power of the discovery signal.

Additionally, according to the present invention, UE for transmitting a discovery signal in a wireless communication system that supports D2D communication includes a transceiver unit configured to transmit and receive a signal to and from a serving eNB or a neighboring eNB, and a control unit configured to receive serving eNB-related information from a serving eNB of the UE, to receive neighboring eNB-related information from a neighboring eNB of the UE, to determine whether D2D communication subframe of the serving eNB and D2D communication subframe of the neighboring eNB are overlapped with each other, based on the serving eNB-related information and the neighboring eNB-related information, and if overlapped, to transmit a discovery signal at an overlap section.

**Advantageous Effects of Invention**

According to this invention, in a wireless communication system where D2D communication and wireless cellular communication coexist, interference with the wireless cellular communication can be minimized by controlling transmission power of a discovery signal for D2D communication.

**Brief Description of Drawings**

FIG. 1 is a diagram illustrating a situation in which D2D communication is supported in a cellular system.
FIG. 2 is a diagram illustrating a state in which D2D transmission and typical cellular transmission are multiplexed using TDM scheme.
FIG. 3 is a diagram illustrating a case in which TDM multiplexing of cellular resources and D2D resources is defined in different forms between two eNBs with no synchronization.
FIG. 4 is a diagram illustrating a network according to the first embodiment of the present invention.
FIG. 5 is a flow diagram illustrating an operating process of eNB according to the first embodiment of the present invention.
FIG. 6A is a flow diagram illustrating an operating process of UE according to the first embodiment of the present invention.
FIG. 6B is a diagram illustrating a process of delivering D2D setting information 653 from a neighboring cell 651 to a serving cell 652.
FIG. 7 is a diagram illustrating a network according to the second embodiment of the present invention.
FIG. 8 is a flow diagram illustrating an operating process of eNB according to the second embodiment of the present invention.
FIG. 9 is a flow diagram illustrating an operating process of UE according to the second embodiment of the present invention.
FIG. 10 is a diagram illustrating the occurrence of D2D resource overlap on the time axis in case of different settings between cells.

FIG. 11 is a flow diagram illustrating an operating process of UE according to the third embodiment of the present invention.

FIG. 12 is a diagram illustrating a network according to the fourth embodiment of the present invention.

FIG. 13 is a flow diagram illustrating an operating process of UE according to the fourth embodiment of the present invention.

FIG. 14 is a flow diagram illustrating an operating process of eNB according to the fifth embodiment of the present invention.

FIG. 15 is a flow diagram illustrating an operating process of UE according to the fifth embodiment of the present invention.

**Mode for the Invention**

Hereinafter, embodiments of the present invention will be described with reference to the accompanying drawings. In this disclosure, well known techniques may not be described or illustrated in detail to avoid obscuring the subject matter of the present invention. Additionally, the terms used herein are only used to describe specific various embodiments, and are not intended to limit this invention. The present invention may be embodied in many different forms and should not be construed as limited to the embodiments set forth herein.

Although embodiments of the present invention will be described hereinafter by mainly targeting OFDM-based wireless communication systems, especially 3GPP E-UTRAN standards, the essential concept of this invention may be favorably applied to any other communication system having a similar technical background and channel form without departing from the scope of this invention as will be understood by those skilled in the art.

In the following embodiments of this invention, eNB and cell may be used as the same meaning. Additionally, D2D communication may be used as including a UE discovery operation for finding neighboring UE and also direct communication for exchanging information between UEs.

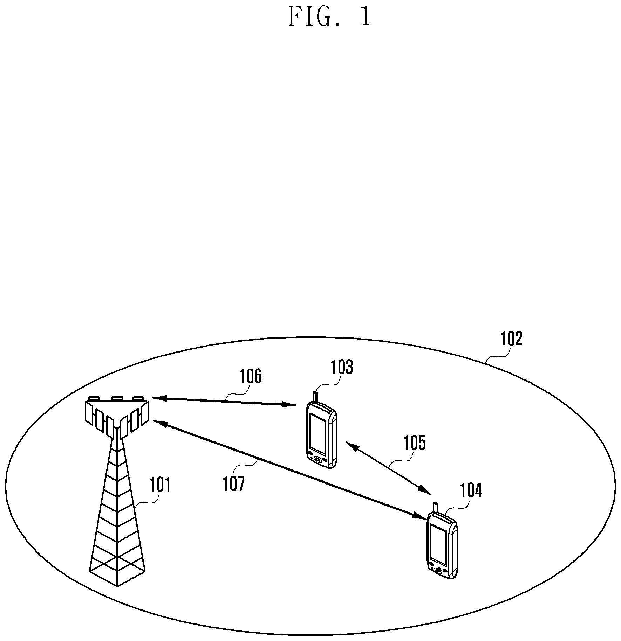

FIG. 1 is a diagram illustrating a situation in which D2D communication is supported in a cellular system.

An evolved node B (eNB) 101 is in charge of UEs 103 and 104 within a cell 102 thereof. This may mean that the eNB offers a wireless service to the UEs. The UE 103 performs cellular communication with the UE 101 through a link 106 between UE and eNB, and the UE 104 performs cellular communication with the eNB 101 through a link 107 between UE and eNB. If the UEs 103 and 104 are capable of device-to-device (D2D) communication, a discovery operation or a direct communication operation can be possible using a D2D link 105 without passing through the eNB 101.

Basically it is supposed that D2D technology using a cellular wireless mobile communication system such as the LTE-A system is supported so as not to cause damage to UE using a typical cellular system.

One technique to perform communication without causing interference is to use resources for D2D communication so as not to be overlapped with radio resources used by cellular UE (in this disclosure, cellular UE refers to a device that performs typical UE-to-eNB communication, rather than D2D communication). Another technique is to use resources with the lowest interference while allowing D2D UE to use the same resources as those used by cellular UE.

Backward and forward duplexing technique used in the LTE or LTE-A system is frequency division duplexing (FDD).

In the FDD, backward and forward directions are distinguished from each other by using different frequency resources. In case the FDD system uses D2D communication as distinguished from typical cellular communication resources, the use of backward frequency resources for D2D tends to be prioritized rather than forward resources. The reason is that forward frequency resources in the FDD system have more kinds of multiplexed signals than backward frequency resources and hence make it difficult to separately allocate resources to D2D communication in comparison with backward resources. Additionally, in the FDD system that considers typical cellular UE only, there is more forward traffic than backward traffic due to the nature of a communication service. Also, there is more overhead in forward transmission than in backward transmission. Namely, the burden of frequency use on forward resources is normally greater than the burden of frequency use on backward resources. Therefore, if forward resources are allocated to D2D communication, the burden on forward resources may increase and thereby it may become difficult to balance the use of forward and backward frequency resources.

For the above reasons, the use of backward resources for D2D communication is accepted naturally in the communication system using FDD.

Meanwhile, the above merely describes advantages in case of using backward frequency resources as D2D resources, and is not construed as disallowing the use of forward frequency resources as D2D resources.

Another issue may be how to distinguish D2D communication resources from typical cellular communication resources in backward resources. For a distinction between typical cellular communication resources and D2D communication resources, orthogonal technique such as time division multiplexing (TDM) or frequency division multiplexing (FDM) may be used. Additionally, non-orthogonal technique that reuses the same resources may be possible. As discussed above, D2D communication should be supported so as not to cause damage to UE using typical cellular communication. Therefore, with regard to at least a device discovery operation, orthogonal technique is preferred and TDM scheme is further preferred. The reason that TDM scheme is further preferred is that, by using TDM scheme, the eNB is not required to receive a cellular signal in a D2D resource allocation section, and on the contrary there is no D2D transmission in a cellular communication section. Therefore, D2D transmission does not have influence such as noise on cellular communication.

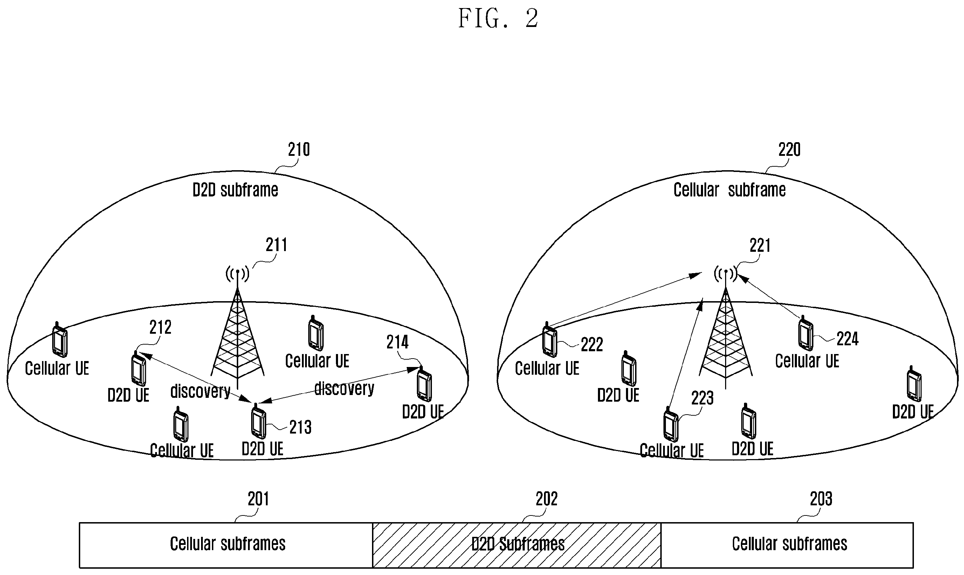

FIG. 2 is a diagram illustrating a state in which D2D transmission and typical cellular transmission are multiplexed using TDM scheme.

In FIG. 2, 201, 202 and 203 represent TDM of cellular subframe and D2D subframe in time. Cellular communication is set to sections 201 and 203, and D2D transmission is set to a section 202. The D2D subframe 202 corresponds to a cell 210. The eNB 211 which is in charge of the cell 210 does not participate in cellular communication, and D2D UEs 212, 213 and 214 only perform D2D communication such as transmission and reception of discovery signals.

Meanwhile, the cellular subframe 201 or 203 corresponds to a cell 220. The eNB 221 which is in charge of the cell 220 participates in cellular communication and performs transmission and reception for backward communication with cellular UEs 222, 223 and 224. In the above, the eNB 211 and the eNB 221 are the same eNB and denote a time-dependent change in the role of eNB. In case of 211, the eNB is not influenced by D2D since there is no backward reception. Also, since there is no cellular transmission, the D2D UE is not influenced by cellular transmission in D2D transmission. On the contrary, in case of 221, the eNB receives backward cellular data, but the D2D UE does not perform D2D transmission. Therefore, backward reception is not influenced by D2D.

Like this, TDM of cellular communication and D2D communication causes no influence to each other. However, this may be applicable to single eNB, and other problem may be expected in case of several eNBs.

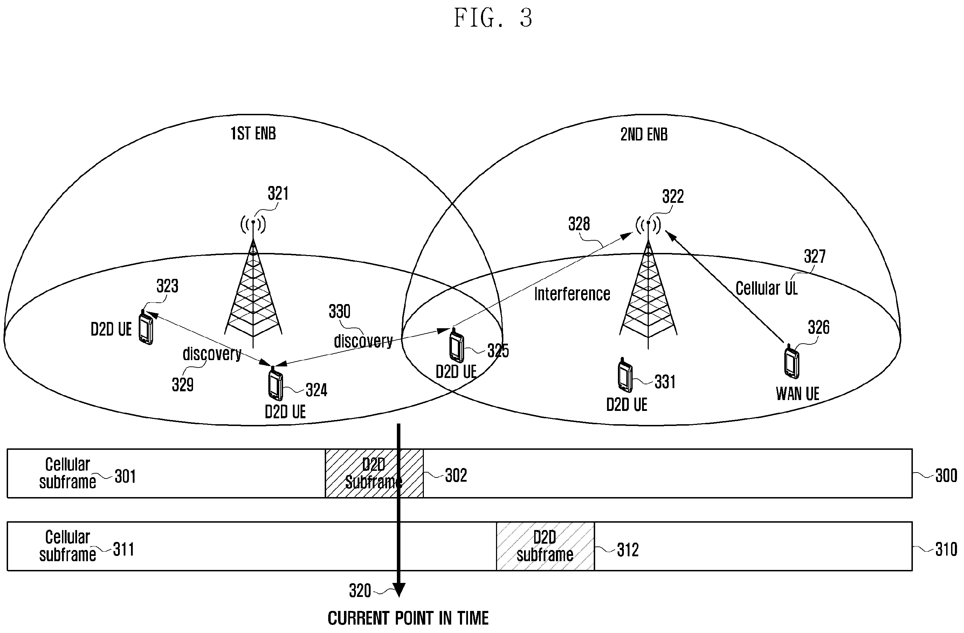

The LTE system does not suppose synchronization between eNBs as an essential condition. Namely, different eNBs may face any asynchronous situation. In case there are two asynchronous eNBs, these eNBs may establish TDM of cellular resources and D2D resources in different forms. Of course, even when two eNBs are synchronized with each other, it is possible to establish TDM of cellular resources and D2D resource in different forms. The above case means that a cell adjacent to a certain cell defined as D2D subframe may be defined as cellular subframe. A related situation and problem are shown in FIG. 3.

FIG. 3 is a diagram illustrating a case in which TDM multiplexing of cellular resources and D2D resources is defined in different forms between two eNBs with no synchronization.

In FIG. 3, a reference number 300 represents the time axis of the first eNB 321 and is formed of cellular subframe 301 and D2D subframe 302 through TDM. On the contrary, a reference number 310 represents the time axis of the second eNB 322 located near the first eNB 321 and is formed of cellular subframe 311 and the D2D subframe 312. As shown in FIG. 3, sections 302 and 312 do not coincide with each other. If a reference number 320 in FIG. 3 indicates a current point in time, the first eNB 321 establishes D2D subframe, whereas the second eNB 322 establishes cellular subframe. Therefore, D2D UEs 323, 324 and 325 belonging to the first eNB 321 transmit or receive D2D discovery signals 329 and 330. On the contrary, cellular UE 326 belonging to the second eNB 326 can transmit a backward cellular signal 327 to the second eNB 236, and D2D UE 331 belonging to the second eNB 326 cannot transmit a D2D discovery signal. Meanwhile, the D2D UE 325 is located at the boundary between the first and second eNBs 321 and 322. When the D2D UE 325 transmits the discovery signal 330 according to the operation of the first eNB 321, this signal is received in the form of noise (i.e., interference) 328 by the second eNB 322. This causes the degradation of reception performance when the second eNB 322 receives the signal 327 of the cellular UE 326 (based on the assumption that the same frequency resource is used).

Another problem in FIG. 3 is that D2D UEs belonging to different eNBs can hardly find each other due to impossible transmission and reception of a discovery signal. Namely, since having different subframes for transmitting and receiving discovery signals, the D2D UEs 324 and 331 in FIG. 3 fail to receive a discovery signal from each other.

As discussed above, if two asynchronous eNBs establish TDM of cellular resources and D2D resources in different forms, D2D transmission from one eNB may arrive at the other eNB as considerable noise. Also, UEs that belong to such eNBs may fail to find discovery signals.

In order to solve a problem of the above scenario that D2D transmission deteriorates the reception performance of cellular communication in a neighboring cell, the present invention provides a power control procedure for D2D UE and related operations of eNB and UE. Further to solve a problem that a D2D discovery is more difficult, this invention provides related operations of eNB and UE.

Meanwhile, the above discussion is based on the assumption that multiplexing of D2D resources and cellular resources uses TDM scheme. Different eNBs may use different techniques for TDM of D2D resources and cellular resources. In addition, a discovery signal transmitted using D2D resources may act as noise in cellular communication of neighboring eNB, thus degrading the performance of cellular communication.

Hereinafter, methods for solving the degradation of cellular communication performance in a neighboring cell due to D2D transmission will be described through embodiments.

**First Embodiment. Power Control by Serving eNB**

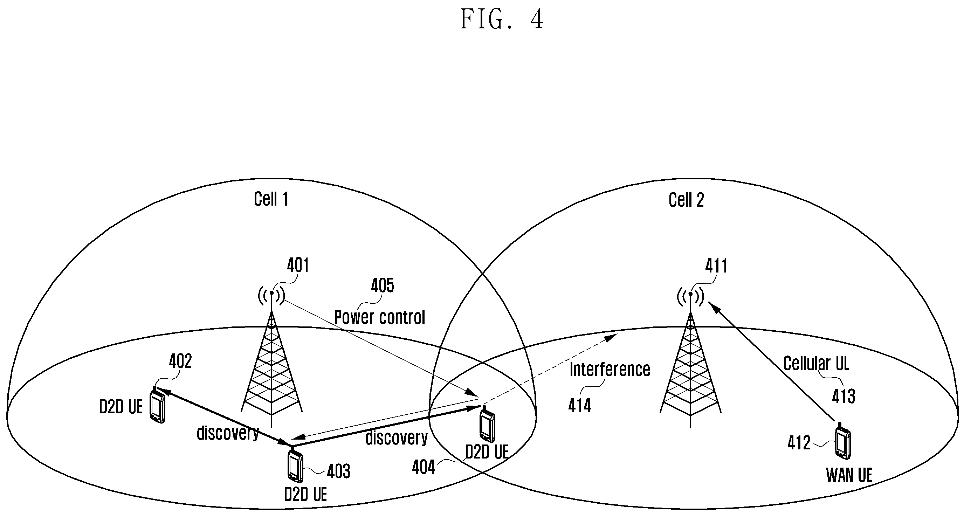

The first embodiment of this invention will address a method by which serving eNB controls the strength of a discovery signal of D2D UE. Specifically, the first embodiment suggests a method in which serving eNB (or a serving cell) controls, through a power control of D2D, the strength of a discovery signal of D2D UE located near neighboring eNB (or a neighboring cell) performing cellular communication such that the discovery signal may not affect the performance of cellular communication in the neighboring eNB. The first embodiment will be described with reference to FIG. 4.

In FIG. 4, the eNB 401 allocates current subframe for a D2D discovery signal, and the eNB 411 allocates the same subframe for cellular communication. Therefore, D2D UEs 402, 403 and 404 that belong to the eNB 401 transmit discovery signals using predetermined time-frequency resources according to a discovery signal transmission procedure and also receive such discovery signals from other UEs. At this time, the D2D UE 404 is located at the boundary between two eNBs 401 and 411, so that there is a possibility that a D2D discovery signal transmitted by the UE 404 may be received with considerable reception power by the eNB 411.

The reception of the D2D discovery signal transmitted by the UE 404 may act as considerable noise when the eNB 411 receives backward cellular data from cellular UE 412 that belongs to the eNB 411. Namely, the backward cellular transmission performance of the UE 412 may be deteriorated. A method for minimizing an influence on the cellular data reception performance of the eNB 411 is to control D2D discovery signal transmission power of the UE 404 and thereby to reduce D2D discovery signal reception power of the eNB 411 to a specific value or less. Namely, for smooth cellular communication of the neighboring eNB 411, the UE 404 reduces transmission power of a D2D discovery signal and thereby minimizes the amount of noise that arrives at the eNB 411.

For a transmission power control of a D2D discovery signal suggested by this embodiment, the serving eNB signals related information of neighboring eNB. For this, the serving eNB should obtain such related information of neighboring eNB. In this embodiment, related information of neighboring eNB may be obtained through the X2 interface which is an interface between eNBs.

A signaling scheme is to insert related information into a system information block (hereinafter, SIB) which is information that may be received by RRC-IDLE mode UE (hereinafter, idle UE) that participates in transmission and reception of discovery signals, and then to signal SIB to D2D UEs. Of course, in case UE that participates in D2D is RRC-CONNECTED mode UE (hereinafter, connected UE), related information may be delivered through additional RRC signaling, dynamic signaling, control information of a physical layer, etc. other than SIB information. Related information of neighboring eNB signaled by the serving eNB may include the following information.

    1. Neighboring eNB-related information

        A. eNB ID
        B. D2D-cellular multiplexing information
        C. D2D signal reception power target (D2D_RX_TARGET_POWER_eNB)
        D. CRS transmission power
        E. Other neighboring cell information

Namely, certain eNB broadcasts D2D information (as listed above) of neighboring eNB to D2D UEs. If the neighboring eNB is detected, D2D UE compares D2D-cellular multiplexing information between serving eNB and neighboring eNB, thereby determines whether subframe for transmitting a D2D discovery signal by the UE is established as D2D subframe by the neighboring eNB, and then performs a power control through Equation 1 in case the neighboring eNB uses cellular communication.

[Equation 1]

$$P_{D2D} = \min\{P_{CMAX,c}, D2D\_RX\_TARGET\_POWER\_eNB + PL_C\}\,[dBm]$$

In Equation 1, $P_{D2D}$ denotes transmission power for a D2D discovery signal, and $P_{CMAX,c}$ denotes the maximum power transmittable by UE (i.e., the maximum power which can be transmitted physically by UE, or the maximum UE transmission power defined by eNB). Additionally, D2D_RX_TARGET-POWER_eNB denotes information signaled by serving eNB, and PLc denotes a path loss value calculated from a cell specific reference signal (CRS) of neighboring eNB. This value may be obtained by calculating CRS reception power and then comparing it with received CRS transmission power. The above equation is an equation in case of normal methodology, and a detailed power control may be performed by multiplying and/or adding certain values to the above equation.

If there are two or more neighboring cells, Equation 2 given below may be used. In Equation 2, n denotes the number of neighboring eNBs.

[Equation 2]

$$P_{D2D} = \min\{P_{CMAX,c}, D2D\_RX\_TARGET\_POWER\_eNB\_1 + PL_{c\_1},$$

$$D2D\_RX\_TARGET\_POWER\_eNB\_2 + PL_{c\_2},$$

$$\cdots, D2D\_RX\_TARGET\_POWER\_eNB\_n + PL_{c\_n}\}[dBm]$$

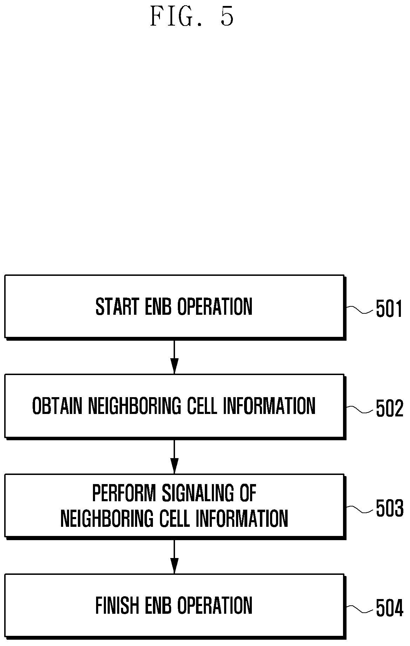

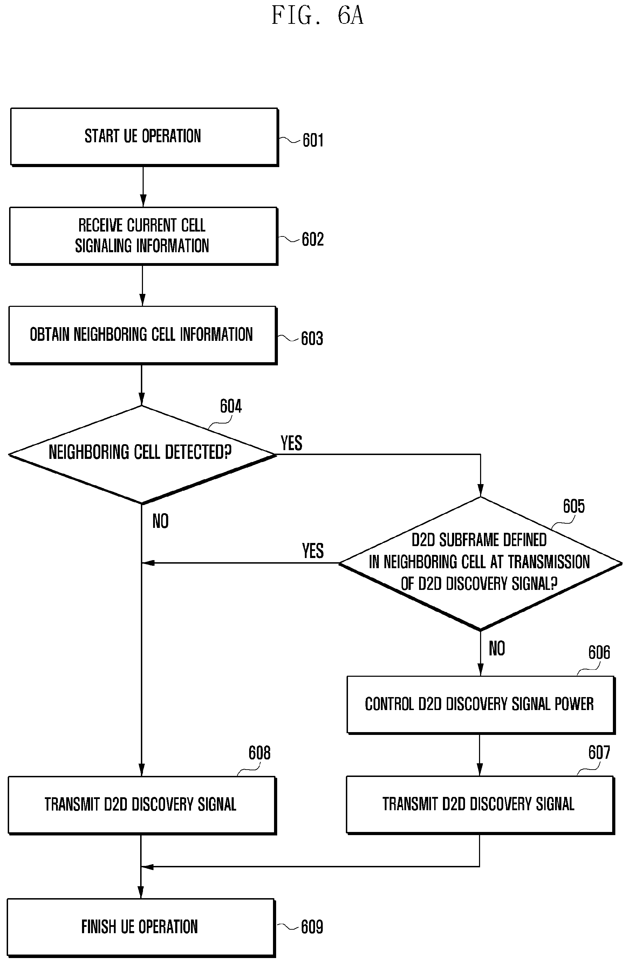

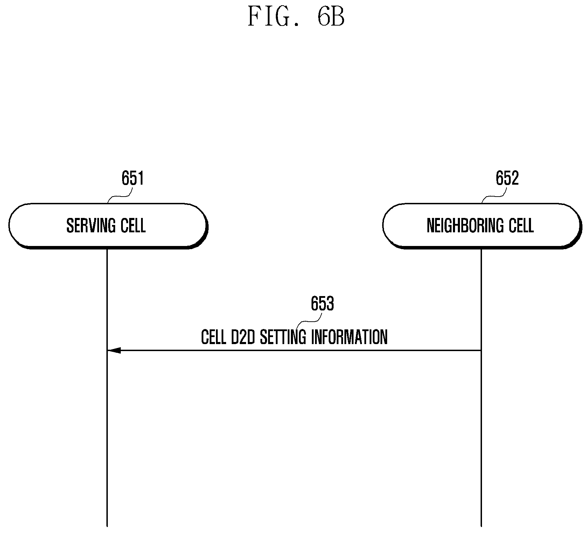

Hereinafter, operations of eNB and UE according to the first embodiment will be described with reference to FIGS. 5 and 6.

First, FIG. 5 is a flow diagram illustrating an operating process of eNB according to the first embodiment of the present invention.

Referring to FIG. 5, at step 501, the eNB starts the operation thereof.

At step 502, the eNB obtains information about a neighboring cell. As discussed above, the eNB may obtain neighboring eNB-related information through the X2 interface. An example of neighboring eNB-related information is also given above.

At step 503, using SIB signaling, RRC signaling, or dynamic signaling, the eNB transmits (i.e., signaling) the information about a neighboring cell to D2D UEs in a cell. At step 504, the operation is finished.

FIG. 6A is a flow diagram illustrating an operating process of UE according to the first embodiment of the present invention.

Referring to FIG. 6, D2D UE starts the UE operation at step 601.

Then, at step 602, the UE receives D2D related information including neighboring eNB-related information from a serving cell. As discussed above, the UE may receive the D2D related information through SIB signaling, RRC signaling, or dynamic signaling.

Since information about a neighboring cell is contained in D2D related information, the UE may obtain neighboring cell D2D related information at step 603. The neighboring cell D2D related information may be, as discussed above, eNB ID, D2D-cellular multiplexing information, D2D signal reception power target (D2D_RX_TARGET_POWER_eNB), CRS transmission power, other neighboring cell information, and the like.

At step 604, the UE determines whether a neighboring cell is detected since current UE is located near the neighboring cell. This determination may be made by detecting a synchronization signal of a neighboring cell and determining the received strength of CRS, or by determining the received strength of CRS and determining whether a path loss value calculated from transmission power and reception power of CRS is greater than a given value.

If no neighboring cell is detected at step 604, the UE transmits a D2D discovery signal without any additional power control at step 608. At this time, transmission power may be $P_{CMAX,c}$, namely the maximum power transmittable by UE. Of course, the $P_{CMAX,c}$ may be defined for D2D transmission by eNB or specified for D2D transmission in the standards.

Meanwhile, if any neighboring cell is detected at step 604, the UE proceeds with step 605 and determines whether subframe for transmitting a D2D discovery signal in the neighboring cell is set to D2D communication or typical cellular communication.

As the result of determination, if the corresponding subframe of the neighboring cell is set equally to D2D communication, the UE transmits a discovery signal without any additional power control at step 608. On the contrary, if the neighboring cell is set to cellular communication at step 605, the UE performs a control, using the above equation, for D2D discovery signal transmission power at step 606.

Then the UE transmits a D2D discovery signal by using the determined transmission power at step 607 and finishes the UE operation at step 609.

Meanwhile, in the above-discussed method, the serving cell signals, to UE, neighboring eNB information together with serving cell D2D information. For this method, the neighboring cell should deliver D2D setting information to the serving cell.

FIG. 6B is a diagram illustrating a process of delivering D2D setting information 653 from a neighboring cell 651 to a serving cell 652.

The D2D setting information 653 may be delivered using the X2 signaling which is an interface between eNBs. The cell D2D setting information 653 may include the following information.

A. eNB ID
B. D2D-cellular multiplexing information
C. D2D signal reception power target (D2D_RX_TARGET_POWER_eNB)
D. CRS transmission power
E. Other neighboring cell information

**Second Embodiment. Power Control by Neighboring eNB**

Contrary to the first embodiment in which a power control for a D2D discovery signal is performed using information signaled by the serving eNB, the second embodiment of this invention suggests a method by which the UE directly receives information from the neighboring eNB and performs a power control for a D2D discovery signal.

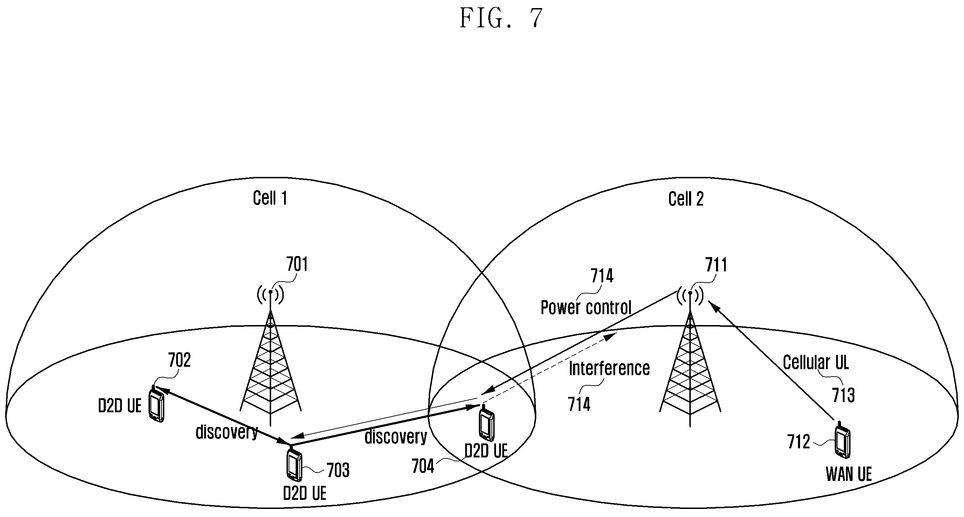

FIG. 7 is a diagram illustrating a network according to the second embodiment of the present invention.
In FIG. 7, the eNB 701 allocates current subframe for a D2D discovery signal, and the eNB 711 allocates the same subframe for cellular communication. Therefore, D2D UEs 702, 703 and 704 that belong to the eNB 701 transmit discovery signals using predetermined time-frequency resources according to a discovery signal transmission procedure and also receive such discovery signals from other UEs.
At this time, the D2D UE 704 is located at the boundary between two eNBs 701 and 711, so that there is a possibility that a D2D discovery signal transmitted by the UE 704 may be received with considerable reception power by the eNB 711. The reception of the D2D discovery signal transmitted by the UE 704 may act as considerable noise when the eNB 711 receives backward cellular data from cellular UE 712 that belongs to the eNB 711. Namely, the backward cellular transmission performance of the UE 712 may be deteriorated. A method for minimizing an influence on the cellular data reception performance of the eNB 711 is to control D2D discovery signal transmission power of the UE 704 and thereby to reduce D2D discovery signal reception power of the eNB 711 to a specific value or less. Namely, for smooth cellular communication of the neighboring eNB 711, the UE 704 reduces transmission power of a D2D discovery signal and thereby minimizes the amount of noise that arrives at the eNB 711.
For a transmission power control of a D2D discovery signal suggested by the second embodiment, the neighboring eNB directly signals D2D related information. A signaling scheme is to insert the related information into a system information block (hereinafter, SIB) which is information that may be received by RRC-IDLE mode UE (hereinafter, idle UE) that participates in transmission and reception of discovery signals, and then to signal SIB to D2D UEs. At this time, the UE should be located near the neighboring eNB so as to read SIB of the neighboring eNB. Additionally, although it is previously described that the D2D related information is transmitted through SIB, this is not a limitation and does not exclude transmission through RRC signaling, dynamic signaling, control information of a physical layer, or the like.
The D2D related information signaled by the neighboring eNB may include the following information.

1. D2D related information

A. D2D-cellular multiplexing information
B. D2D signal reception power target (D2D_RX_TARGET_POWER_eNB)
C. CRS transmission power
D. Other cell information

Namely, certain eNB broadcasts its own D2D information (as listed above) to D2D UEs. Then, if the neighboring eNB is detected, the D2D UE (e.g., the D2D UE 704 located at the boundary between two eNBs 701 and 711) compares D2D-cellular multiplexing information between serving eNB and neighboring eNB, thereby determines whether subframe for transmitting a D2D discovery signal by the UE is established as D2D subframe by the neighboring eNB. In case the neighboring eNB uses cellular communication, the UE performs a power control through Equation 3.

[Equation 3]

$$P_{D2D} = \min\{P_{CMAX,c}, D2D\_RX\_TARGET\_POWER\_eNB + PL_C\}\,[dBm]$$

In Equation 3, $P_{D2D}$ denotes transmission power for a D2D discovery signal, and $P_{CMAX,c}$ denotes the maximum power transmittable by UE (i.e., the maximum power which can be transmitted physically by UE, or the maximum UE transmission power defined by eNB). Additionally, D2D_RX_TARGET-POWER_eNB denotes information signaled by serving eNB, and PLc denotes a path loss value calculated from a cell specific reference signal (CRS) of neighboring eNB. This value may be obtained by calculating CRS reception power and then comparing it with received CRS transmission power. The above equation is an equation in case of normal methodology, and a detailed power control may be performed by multiplying and/or adding certain values to the above equation.

If there are two or more neighboring cells, Equation 4 given below may be used. In the following, n denotes the number of neighboring eNBs.

[Equation 4]

$$P_{D2D} = \min\{P_{CMAX,c}, D2D\_RX\_TARGET\_POWER\_eNB\_1 + PL_{c\_1},$$

$$D2D\_RX\_TARGET\_POWER\_eNB\_2 + PL_{c\_2},$$

$$\cdots, D2D\_RX\_TARGET\_POWER\_eNB\_n + PL_{c\_n}\}[dBm]$$

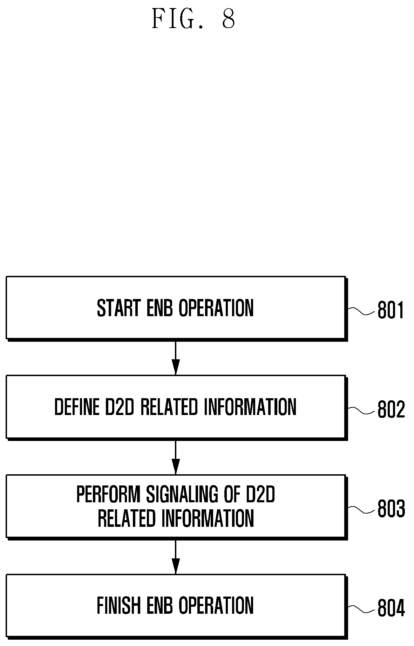

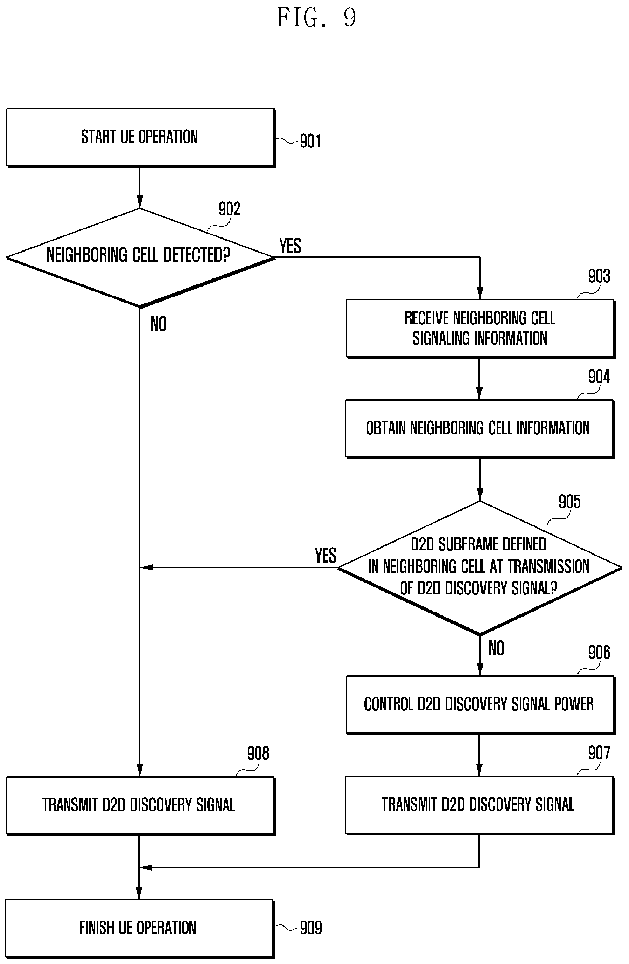

Hereinafter, operations of eNB and UE according to the second embodiment will be described with reference to FIGS. 8 and 9.

FIG. 8 is a flow diagram illustrating an operating process of eNB according to the second embodiment of the present invention.

Referring to FIG. 8, the eNB starts the operation thereof at step 801 and establishes D2D related information in a cell at step 802. The D2D related information may include at least one of D2D-cellular multiplexing information, D2D signal reception power target (D2D_RX-TARGET-POWER_eNB), CRS transmission power, and other cell information, as discussed above.

Then, the eNB signals the information using SIB signaling at step 803 and finishes the operation at step 804.

FIG. 9 is a flow diagram illustrating an operating process of UE according to the second embodiment of the present invention.

Referring to FIG. 9, D2D UE starts the operation thereof at step 901.

Then, at step 902, the D2D UE determines whether a neighboring cell is detected since current UE is located near the neighboring cell. This determination may be made by detecting a synchronization signal of a neighboring cell and determining the received strength of CRS, or by determining the received strength of CRS and determining whether a path loss value calculated from transmission power and reception power of CRS is greater than a given value.

If no neighboring cell is detected at step 902, the UE transmits a D2D discovery signal without any additional power control at step 908. At this time, transmission power may be $P_{CMAX,c}$, namely the maximum power transmittable by UE. Of course, the $P_{CMAX,c}$ may be defined for D2D transmission by eNB or specified for D2D transmission in the standards.

Meanwhile, if any neighboring cell is detected at step 902, the UE receives D2D related information from the neighboring eNB at step 903. Then, at step 904, the UE may obtain neighboring cell D2D related information.

The neighboring cell D2D related information may include at least one of D2D-cellular multiplexing information, D2D signal reception power target (D2D_RX_TARGET_POWER_eNB), CRS transmission power, and other cell information, as discussed above.

Then, at step 905, the UE determines whether subframe for transmitting a D2D discovery signal in the neighboring cell is set to D2D communication or typical cellular communication.

If the neighboring cell is set equally to D2D communication, the UE transmits a discovery signal without any additional power control at step 908. On the contrary, if the neighboring cell is set to cellular communication at step 905, the UE performs a control, using Equation 3 or 4, for D2D discovery signal transmission power at step 906.

Then the UE transmits a D2D discovery signal by using the determined transmission power at step 907 and finishes the UE operation at step 909.

**Third Embodiment. Discovery Signal Transmission Using Overlap Part of D2D Subframe between Cells**

Methods suggested through the first and second embodiments are to solve a problem of the degradation of reception performance in cellular communication by performing a power control for D2D discovery signal transmission of UE in case a serving cell is set to D2D discovery and also a neighboring cell is set to cellular communication.

As discussed above, D2D resources and cellular resources are multiplexed by means of TDM scheme. Even though cells have different settings, a certain overlap of D2D resources may occur on the time axis. Therefore, if UE located near a neighboring cell transmits a D2D discovery signal by using subframe defined as D2D resources in both cells, it is possible to remove influence of the discovery signal on cellular communication. The third embodiment to be discussed hereinafter corresponds to this case.

UE that belongs to a serving cell selects one discovery signal resource from the whole D2D subframe, i.e., resources capable of transmitting a discovery signal, defined in the serving cell, and then transmits the discovery signal by using the selected resource. This selection may be performed in a manner of finding a resource having the smallest reception power from among the whole resources.

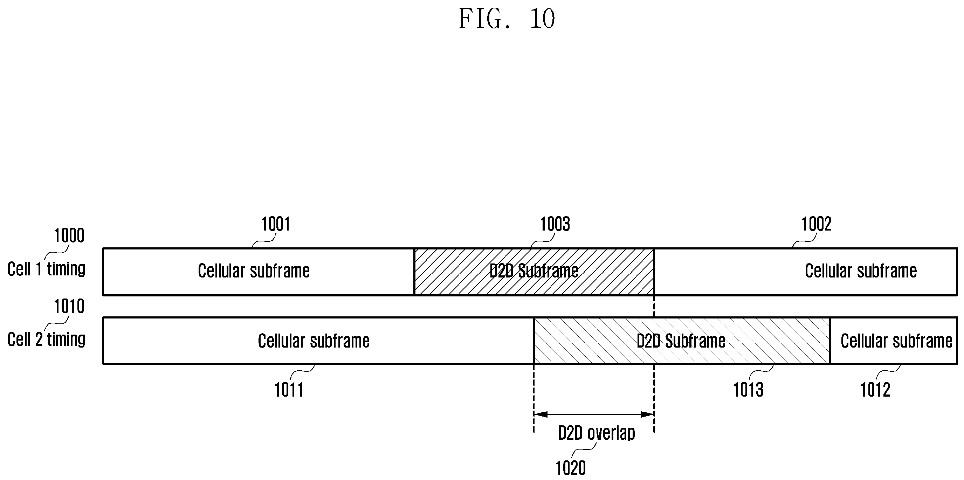

Now, the third embodiment will be described using FIG. 10.

FIG. 10 is a diagram illustrating the occurrence of D2D resource overlap on the time axis in case of different settings between cells.

In this embodiment, it is supposed that UE is located between a serving cell 1000 and a neighboring cell 1010 and also knows both the position of D2D subframe 1003 of the serving cell and the position of D2D subframe 1013 of the neighboring cell.

If UE belongs to only the serving cell 1000, the UE selects a discovery signal resource from among the whole resources 1003 by considering only the position of D2D subframe 1003 of the serving cell and then transmits a discovery signal through the selected resource. On the other hand, if UE belongs to only the neighboring cell 1010, the UE selects a discovery signal resource from among the whole resources 1013 by considering only the position of D2D subframe 1013 of the neighboring cell and then transmits a discovery signal through the selected resource.

However, when UE belongs to both the serving cell and the neighboring cell, the UE selects a discovery signal resource from only an overlap part 1020 of D2D resource in both cells rather than from the whole resources.

If a discovery signal is transmitted using the resource selected from the overlap part 1020, the discovery signal does not act as noise to both cells and thus the degradation of performance in cellular communication is not caused.

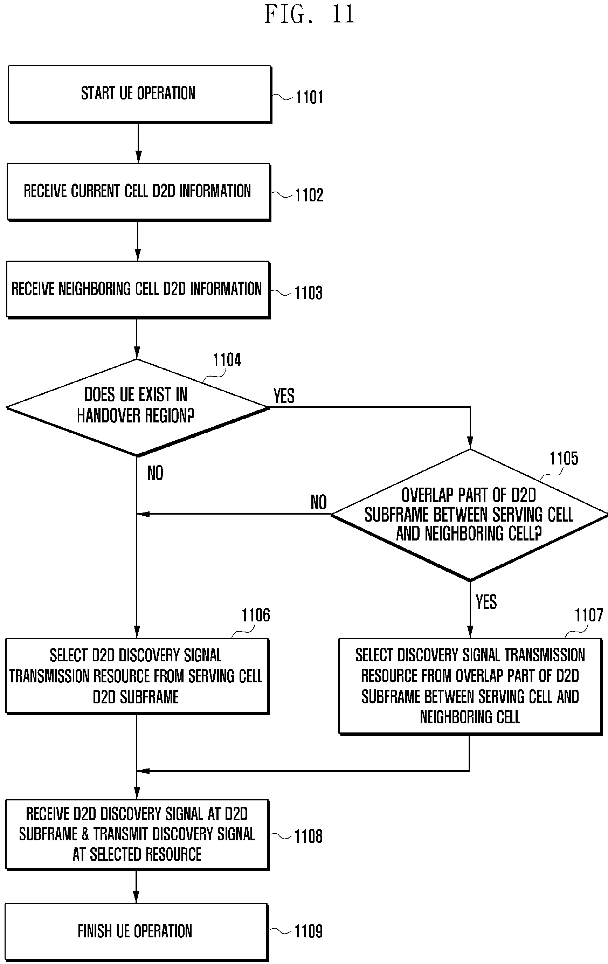

The operation of UE for this embodiment is now described using FIG. 11.

FIG. 11 is a flow diagram illustrating an operating process of UE according to the third embodiment of the present invention.

Referring to FIG. 11, at step 1101, UE starts the UE operation. Then, at step 1102, the UE receives D2D related information of a current cell to which the UE belongs, and at step 1103, receives D2D related information of a neighboring cell. At this time, D2D related information of each cell may be known through SIB signaling of a current cell (serving cell) or of a neighboring cell. Also, D2D related information may be received through RRC signaling, dynamic signaling, control information of a physical layer, or the like.

Then, at step 1104, the UE determines whether the UE exists in a handover region. If the UE does not exist in the handover region, the UE selects at step 1106 a resource for transmitting a discovery signal from D2D subframe defined by a serving cell.

Meanwhile, if it is determined at step 1104 that the UE exists in the handover region, the UE determines at step 1105 whether there is an overlap part between D2D subframe of the serving cell and D2D subframe of the neighboring cell. If there is any overlap part, the UE selects at step 1107 a resource for transmitting a discovery signal from the overlap part between D2D subframe of the serving cell and D2D subframe of the neighboring cell. On the other hand, if there is no overlap part between D2D subframe of the serving cell and D2D subframe of the neighboring cell, the UE selects at step 1106 a resource for transmitting a discovery signal from D2D subframe defined by the serving cell.

Then, at step 1108, the UE transmits a discovery signal using the selected resource in the D2D subframe and also receives, from other UE, a discovery signal using other resource.

**Fourth Embodiment. D2D Discovery Signal Transmission and Reception between Cells**

Proposed in the fourth embodiment is a method in which, when a serving cell and a neighboring cell differently set D2D subframes, the UE receives and decodes a discovery signal from each D2D subframe and thereby receives the discovery signal from other D2D UE in the neighboring cell as well as from other D2D UE in the serving cell.

Of course, a discovery signal transmitted from D2D subframe in the neighboring cell may be too small for UE of the serving cell to receive. Also, if other cellular UE is used for backward cellular data transmission in the serving cell, it is not easy to receive a discovery signal from the neighboring cell due to noise caused by the cellular transmission. However, if the UE knows when other UE of the neighboring cell will transmit a discovery signal, the UE can increase a possibility of receiving discovery signals of many UEs by trying to receive discovery signals as much as possible.

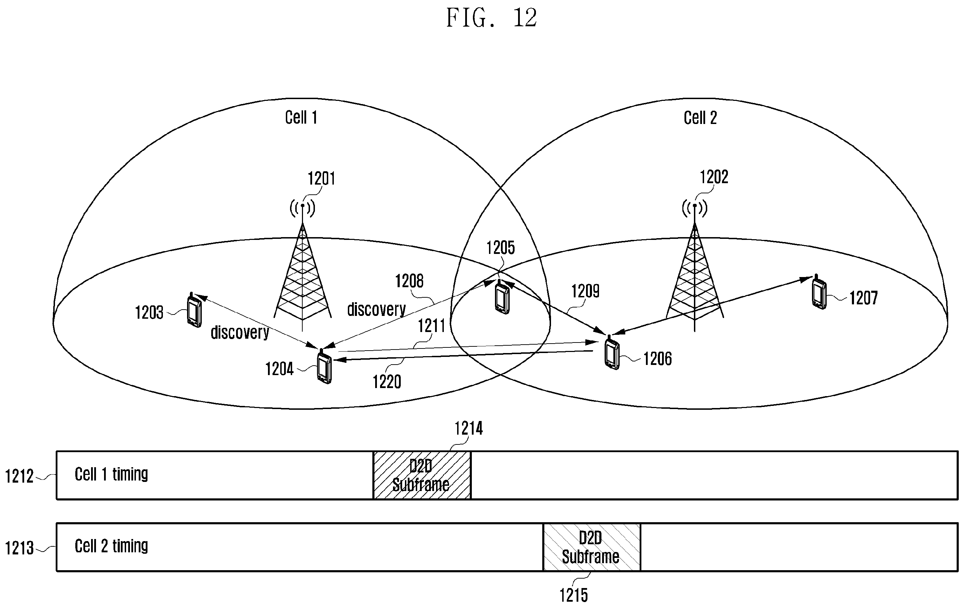

The fourth embodiment will be described through FIG. 12.

In FIG. 12, D2D UEs 1203, 1204 and 1205 belong to a cell 1201, and UEs 1206 and 1207 belong to another cell 1202. At this time, the UE 1205 is located between the cells 1201 and 1202 and is capable of receiving a signal of the cell 1202.

As shown by 1212, D2D subframe of the cell 1201 is set to 1214, and UE of the cell 1201 is configured to transmit a discovery signal using the subframe 1214. On the other hand, D2D subframe of the cell 1202 is set to 1215 different in position from 1214 as shown by 1213, and UE of the cell 1202 is configured to transmit a discovery signal using the subframe 1215.

In such a state where D2D subframes are different from each other between cells, each cell notifies D2D subframe information thereof to UE and also notifies D2D subframe information of a neighboring cell to UE. For this, each cell may obtain the D2D subframe information of a neighboring cell through the X2 interface or the like.

Specifically, the cell 1201 notifies information about D2D subframe of the cell 1201 and about D2D subframe of the cell 1202 to UEs 1203, 1204 and 1205. Then, using the information notified by the cell, the UEs 1203, 1204 and 1205 transmit or receive a discovery signal at the subframe 1214 and further receive a discovery signal at the subframe 1215.

Similarly, the cell 1202 notifies information about D2D subframe of the cell 1202 and about D2D subframe of the cell 1201 to UEs 1206 and 1207. Then, using the information notified by the cell, the UEs 1206 and 1207 transmit or receive a discovery signal at the subframe 1215 and further receive a discovery signal at the subframe 1214.

The UE 1204 transmits a discovery signal by using the subframe 1214, and the UE 1206 may try to receive a discovery signal at the subframe 1214 and thereby receive the discovery signal of the UE 1204. On the contrary, the UE 1206 transmits a discovery signal by using the subframe 1215, and the UE 1204 may try to receive a discovery signal at the subframe 1215 and thereby receive the discovery signal of the UE 1206.

Additionally, the eNB may notify, to UEs, information (transmission approval information about one or more discovery signals) that instructs the UEs to further transmit a discovery signal at subframe defined in a neighboring cell. In this case, the UE transmits a discovery signal at D2D subframe defined in the cell and also transmits again such a discovery signal at D2D subframe defined in the neighboring cell.

The eNB operation in the fourth embodiment is the same as that in the second embodiment discussed above with reference to FIG. 8. So, description thereof is skipped.

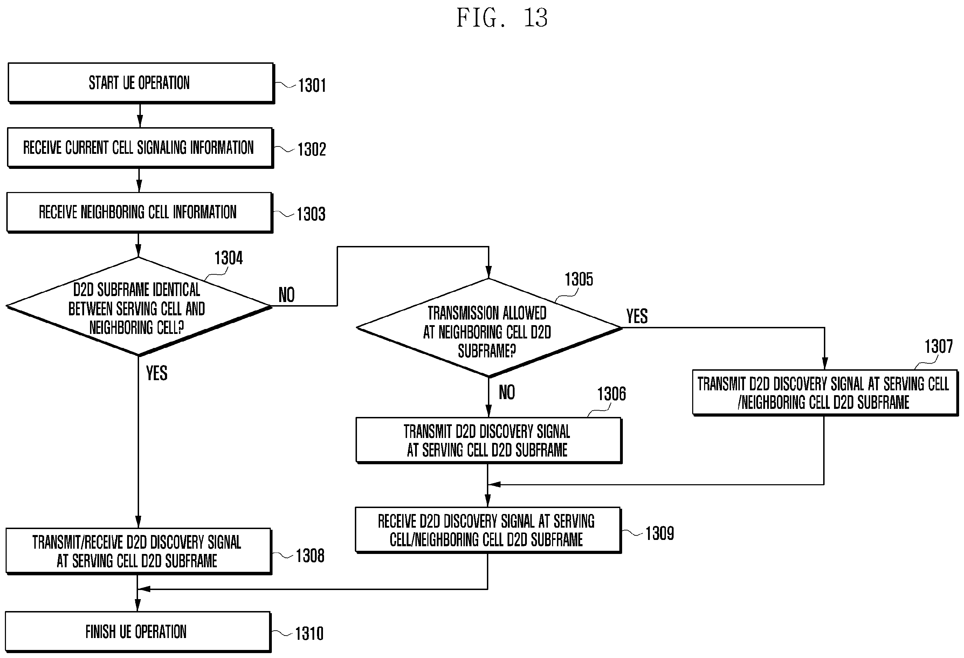

Hereinafter, the UE operation according to the fourth embodiment will be described with reference to FIG. 13.

FIG. 13 is a flow diagram illustrating an operating process of UE according to the fourth embodiment of the present invention.

First of all, at step 1301, D2D UE starts the operation thereof. Then, at step 1302, the D2D UE receives D2D related information from a serving cell. In this case, since information about a neighboring cell is contained in the D2D related information, the D2D UE can obtain D2D related information about the neighboring cell at step 1303. The neighboring cell D2D related information may include, as discussed above, at least one of eNB ID, D2D-cellular multiplexing information, and a neighboring cell discovery signal transmission indicator.

Then, at step 1304, the D2D UE determines whether D2D subframe defined by a current serving cell is identical to D2D subframe defined by a neighboring cell. If D2D subframes of both cells are identical at step 1304, the UE transmits a D2D discovery signal and tries to receive a discovery signal of other UE at the D2D subframe defined by the serving cell at step 1308.

Meanwhile, it is determined at step 1304 that D2D subframes of both cells are not identical, the UE may determine at step 1305 whether transmission is allowed or not at the D2D subframe of the neighboring cell. This determination may be made through a neighboring cell discovery signal transmission indicator.

If it is determined that transmission of a discovery signal is not allowed at the D2D subframe of the neighboring cell, the D2D UE transmits a D2D discovery signal at the serving cell D2D subframe at step 1306 and tries to receive a D2D discovery signal at both the serving cell D2D subframe and the neighboring cell D2D subframe at step 1309.

On the other hand, if it is determined at step 1305 that the neighboring cell discovery signal transmission indicator allows transmission at the D2D subframe of the neighboring cell, the D2D UE transmits a D2D discovery signal at the serving cell D2D subframe and further transmits a D2D discovery signal at the neighboring cell D2D subframe at step 1307. Then, at step 1309, the D2D UE tries to receive a D2D discovery signal at both the serving cell D2D subframe and the neighboring cell D2D subframe.

At step 1310, the D2D UE finishes the UE operation.

Meanwhile, in case the UE fails to have a function to transmit more than one discovery signal, steps 1305 and 1307 may be skipped.

**Fifth Embodiment. D2D Discovery Signal Transmission and Reception between Cells**

Described in the fifth embodiment is modified signaling of the fourth embodiment and related operations of eNB and UE.

In case there are a number of neighboring cells, the UE transmits a discovery signal at a certain section in D2D subframe defined in a current serving cell and receives a discovery signal of other UE at the other section. In case of receiving a discovery signal from D2D subframe of a neighboring cell, a D2D subframe section capable of receiving and a D2D subframe section having to receive become different from each other in the UE.

Therefore, in order that eNB receives, from other neighboring eNB, a discovery signal transmitted at a D2D subframe section defined by each cell, this embodiment proposes a method for notifying separately, to D2D UE, transmission D2D subframe that allows the UE to transmit a discovery signal, and reception D2D subframe that allows the UE to receive a discovery signal from UE of a neighboring eNB as well as from UE of a current eNB.

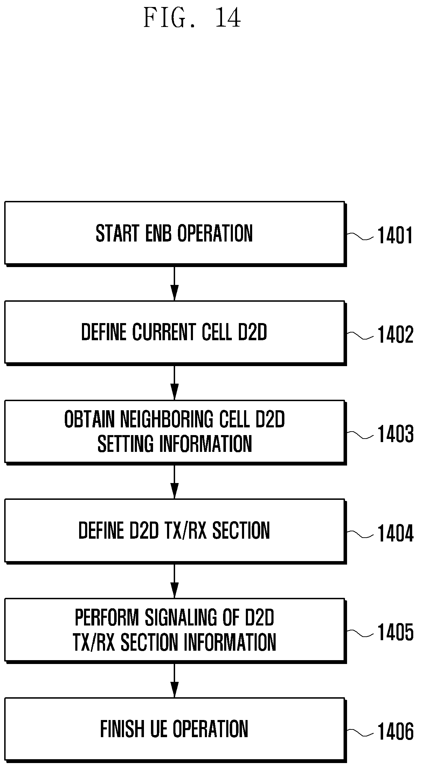

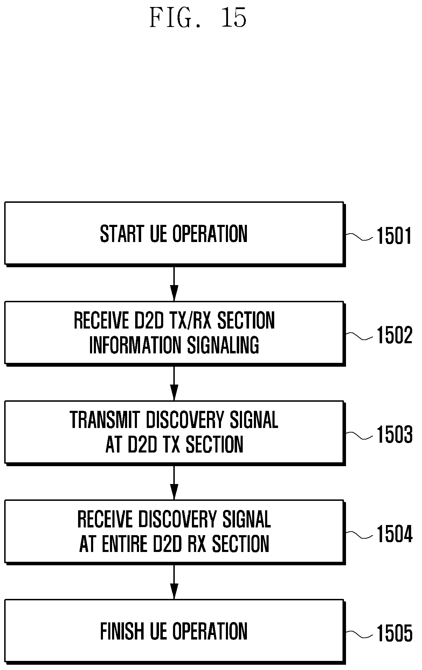

The transmission D2D subframe is D2D subframe defined by the serving cell, and the reception D2D subframe is expressed as union of D2D subframes defined respectively by the current serving cell and the neighboring cell. The operations of eNB and UE in this embodiment will be described using FIGS. 14 and 15.

FIG. 14 is a flow diagram illustrating an operating process of eNB according to the fifth embodiment of the present invention.

Once the eNB operation is started at step 1401, the eNB defines D2D information including D2D subframe of a current cell at step 1402. Then, at step 1403, the eNB obtains D2D setting information of a neighboring cell. This step 1403 of obtaining D2D setting information of the neighboring cell by the eNB may be performed through X2 signaling as discussed above in FIG. 6B.

Then, at step 1404, the eNB defines a D2D transmission section and a D2D reception section by using D2D setting information of the current cell and D2D setting information of the neighboring cell. The D2D transmission section is actual D2D subframe defined by the serving cell, and the D2D reception section is union of D2D subframes defined respectively by the current serving cell and the neighboring cell. Here, union may refer to any subframe defined as D2D subframe by at least one of the serving cell and the neighboring cell. For example, if D2D subframe of the serving cell and D2D subframe of the neighboring cell are identical to each other, the D2D reception section, i.e., union of D2D subframes defined respectively by the current serving cell and the neighboring cell, becomes identical to the D2D transmission section of the serving cell.

Then, at step 1405, the eNB signals information about the D2D transmission section and about the D2D reception section to UE in the eNB. This signaling may be SIB signaling, RRC signaling, and the like. At step 1406, the eNB finishes the operation.

FIG. 15 is a flow diagram illustrating an operating process of UE according to the fifth embodiment of the present invention.

Once the UE operation is started at step 1501, the UE receives information about a D2D transmission section and about a D2D reception section from a current serving cell at step 1502. Using the received information, the UE transmits a discovery signal through the D2D transmission section at step 1503.

Then, at step 1504, the UE receives a discovery signal through the D2D reception section.

Then, at step 1505, the UE finishes the UE operation.

The fifth embodiment may be described as follows.

A serving eNB for transmitting and receiving a signal in a wireless communication system that supports device-to-device (D2D) communication may include a transceiver unit configured to transmit and receive a signal to and from UE or a neighboring eNB adjacent to the serving eNB, and a control unit configured to define D2D setting information about the serving eNB, to define a D2D subframe transmission section of the UE, based on a D2D subframe contained in the D2D setting information about the serving eNB, and to define a D2D subframe reception section of the UE, based on the D2D subframe contained in the D2D setting information about the serving eNB. The control unit may be further configured to obtain D2D setting information about a neighboring eNB from the neighboring eNB, and to define the D2D subframe reception section of the UE by considering the D2D setting information about the neighboring eNB. The D2D setting information may include at least one of an identifier of eNB which defines the D2D setting information, multiplexing information about D2D communication and cellular communication, a D2D signal reception power target, cell specific reference signal (CRS) transmission power, and neighboring cell information. The transceiver unit may include an X2 interface between eNBs, and the control unit may be further configured to obtain D2D setting information about the neighboring eNB through the X2 interface. The control unit may be further configured to signal information about the D2D subframe transmission section of the UE and information about the D2D subframe reception section of the UE to the UE. The control unit may be further configured to transmit information about the D2D subframe transmission section of the UE and information about the D2D subframe reception section of the UE to the UE through at least one signal of a system information block, an upper layer signal, and a physical layer signal.

UE for transmitting and receiving a discovery signal in a wireless communication system that supports device-to-device (D2D) communication may include a transceiver unit configured to transmit and receive a signal to and from eNB or other UE, and a control unit configured to receive information about a D2D subframe transmission section and information about a D2D subframe reception section from a serving eNB of the UE, to transmit a discovery signal, based on information about the D2D subframe transmission section, and to receive a discovery signal, based on information about the D2D subframe reception section. Additionally, the D2D subframe transmission section may be defined based on a D2D subframe contained in D2D setting information about the serving eNB, and the D2D subframe reception section may be defined based on the D2D subframe contained in the D2D setting information about the serving eNB. The D2D subframe reception section may be defined by considering a D2D subframe contained in D2D setting information about the neighboring eNB. The control unit may be further configured to receive information about the D2D subframe transmission section of the UE and information about the D2D subframe reception section of the UE through at least one signal of a system information block, an upper layer signal, and a physical layer signal.

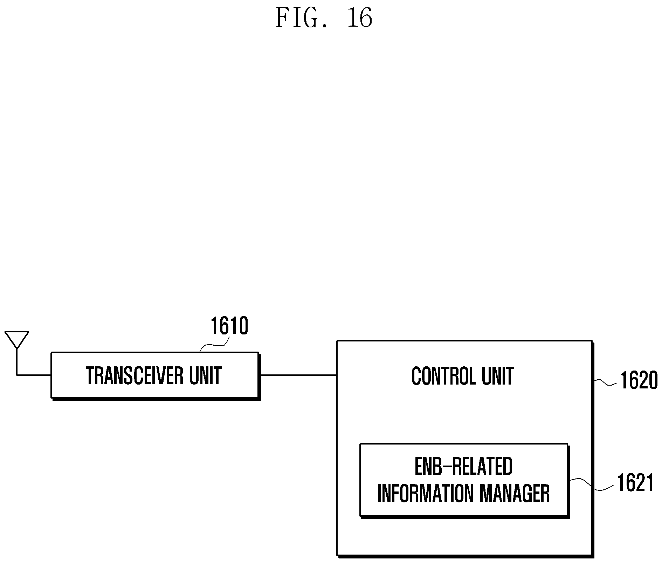

FIG. 16 is a block diagram illustrating an internal structure of eNB according to an embodiment of the present invention. As shown in FIG. 16, the eNB of this invention may include a transceiver unit 1610 and a control unit 1620.

The transceiver unit 1610 transmits and receives a signal to and from certain nodes in a wireless communication system through a wired or wireless interface. For example, the transceiver unit 1610 may transmit and receive control information or data to and from UE through a wireless interface. Additionally, the transceiver unit 1610 may be connected with neighboring eNBs through the X2 interface and thereby transmit or receive eNB-related information.

The control unit 1620 controls a signal flow between respective blocks for the operation of the eNB. For example, the control unit 1620 may control a series of operations for controlling discovery signal transmission power of UE that performs D2D communication. For this, the control unit 1620 may include an eNB-related information manager 1621.

The eNB-related information manager 162 may control eNB-related information, required for controlling discovery signal transmission power of UE performing D2D communication, to be transmitted to the UE. According to embodiments of this invention, the eNB-related information manager 162 may control neighboring eNB-related information, obtained from a neighboring eNB, to be transmitted to the UE.

As discussed above, the eNB-related information may include at least one of an identifier of a neighboring eNB, D2D-cellular multiplexing information, D2D signal reception power target, CRS transmission power, and neighboring cell information. Additionally, the eNB-related information may be transmitted to the UE through at least one signal of SIB, an upper layer signal, and a physical layer signal.

According to an embodiment of this invention, the control unit 1620 may control to obtain D2D setting information of a neighboring eNB, to define transmission/reception section for D2D communication, and to transmit information about the defined transmission/reception section to UE.

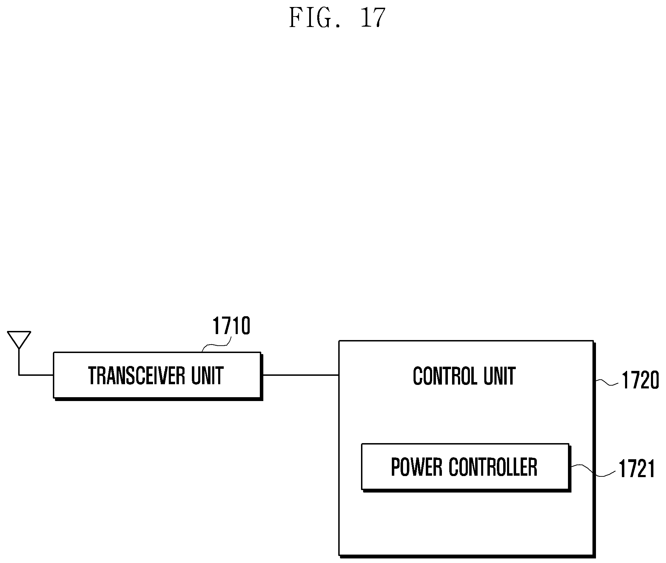

FIG. 17 is a block diagram illustrating an internal structure of UE according to an embodiment of the present invention. As shown in FIG. 17, the UE of this invention may include a transceiver unit 1710 and a control unit 1720.

The transceiver unit 1710 transmits and receives a signal to and from eNB through a wireless interface. According to an embodiment of this invention, the transceiver unit 1710 may receive serving eNB-related information or neighboring eNB-related information from a serving eNB or a neighboring eNB.

The control unit 1720 controls a signal flow between respective blocks for the operation of the UE. The control unit 1720 according to an embodiment of this invention may control transmission power of a discovery signal for performing D2D communication, based on the neighboring eNB-related information received from the serving eNB or the neighboring eNB. For this, the control unit 1720 may include a power controller 1721.

The power controller 1721 may receive the neighboring eNB-related information from the serving eNB or the neighboring eNB and, based on the received information, control transmission power of a discovery signal for performing D2D communication. Since a detailed control process for transmission power of a discovery signal is discussed above, a repeated description is skipped.

Additionally, the control unit 1720 according to an embodiment of this invention may control to select a discovery signal transmission resource from only an overlap part of D2D subframe between the serving eNB and the neighboring eNB, and to transmit a discovery signal.

According to this invention, in a wireless communication system where D2D communication and wireless cellular communication coexist, interference with the wireless cellular communication can be minimized by controlling transmission power of a discovery signal for D2D communication.

While this invention has been particularly shown and described with reference to an exemplary embodiment thereof, it will be understood by those skilled in the art that various changes in form and details may be made therein without departing from the spirit and scope of this invention as defined by the appended claims.

## Claims

1. A signal transmission method of a serving evolved node B (eNB) in a wireless communication system that supports device-to-device (D2D) communication, the method comprising steps of:

   defining D2D setting information about the serving eNB;
   defining a D2D subframe transmission section of user equipment (UE), based on a D2D subframe contained in the D2D setting information about the serving eNB; and
   defining a D2D subframe reception section of the UE, based on the D2D subframe contained in the D2D setting information about the serving eNB.

2. The method of claim 1, further comprising a step of:

   obtaining D2D setting information about a neighboring eNB from the neighboring eNB,
   wherein the step of defining the D2D subframe reception section of the UE includes considering the D2D setting information about the neighboring eNB.

**3.** The method of claim 1, wherein the D2D setting information includes at least one of an identifier of eNB which defines the D2D setting information, multiplexing information about D2D communication and cellular communication, a D2D signal reception power target, cell specific reference signal (CRS) transmission power, and neighboring cell information.

**4.** The method of claim 2, wherein the obtaining step includes obtaining D2D setting information about the neighboring eNB through an X2 interface between eNBs.

**5.** The method of claim 1, further comprising step of:

signaling information about the D2D subframe transmission section of the UE and information about the D2D subframe reception section of the UE to the UE.

**6.** The method of claim 5, wherein the signaling step includes transmitting information about the D2D subframe transmission section of the UE and information about the D2D subframe reception section of the UE to the UE through at least one signal of a system information block, an upper layer signal, and a physical layer signal.

**7.** A discovery signal transmission and reception method of user equipment (UE) in a wireless communication system that supports device-to-device (D2D) communication, the method comprising steps of:

receiving information about a D2D subframe transmission section and information about a D2D subframe reception section from a serving evolved node B (eNB) of the UE;
transmitting a discovery signal, based on information about the D2D subframe transmission section; and
receiving a discovery signal, based on information about the D2D subframe reception section,
wherein the D2D subframe transmission section is defined based on a D2D subframe contained in D2D setting information about the serving eNB, and the D2D subframe reception section is defined based on the D2D subframe contained in the D2D setting information about the serving eNB.

**8.** The method of claim 7, wherein the D2D subframe reception section is defined by considering a D2D subframe contained in D2D setting information about the neighboring eNB.

**9.** The method of claim 7, wherein the receiving step includes receiving information about the D2D subframe transmission section of the UE and information about the D2D subframe reception section of the UE through at least one signal of a system information block, an upper layer signal, and a physical layer signal.

**10.** A serving evolved node B (eNB) for transmitting and receiving a signal in a wireless communication system that supports device-to-device (D2D) communication, the eNB comprising:

a transceiver unit configured to transmit and receive a signal to and from user equipment (UE) or neighboring eNB adjacent to the serving eNB; and
a control unit configured to define D2D setting information about the serving eNB, to define a D2D subframe transmission section of the UE, based on a D2D subframe contained in the D2D setting information about the serving eNB, and to define a D2D subframe reception section of the UE, based on the D2D subframe contained in the D2D setting information about the serving eNB.

**11.** The eNB of claim 10, wherein the control unit is further configured to obtain D2D setting information about a neighboring eNB from the neighboring eNB, and to define the D2D subframe reception section of the UE by considering the D2D setting information about the neighboring eNB.

**12.** The eNB of claim 10, wherein the D2D setting information includes at least one of an identifier of eNB which defines the D2D setting information, multiplexing information about D2D communication and cellular communication, a D2D signal reception power target, cell specific reference signal (CRS) transmission power, and neighboring cell information.

**13.** The eNB of claim 11, wherein the transceiver unit includes an X2 interface between eNBs, and wherein the control unit is further configured to obtain D2D setting information about the neighboring eNB through the X2 interface.

**14.** The eNB of claim 10, wherein the control unit is further configured to signal information about the D2D subframe transmission section of the UE and information about the D2D subframe reception section of the UE to the UE.

**15.** The eNB of claim 14, wherein the control unit is further configured to transmit information about the D2D subframe transmission section of the UE and information about the D2D subframe reception section of the UE to the UE through at least one signal of a system information block, an upper layer signal, and a physical layer signal.

**16.** User equipment (UE) for transmitting and receiving a discovery signal in a wireless communication system that supports device-to-device (D2D) communication, the UE comprising:

a transceiver unit configured to transmit and receive a signal to and from evolved node B (eNB) or other UE; and
a control unit configured to receive information about a D2D subframe transmission section and information about a D2D subframe reception section from a serving eNB of the UE, to transmit a discovery signal, based on information about the D2D subframe transmission section, and to receive a discovery signal, based on information about the D2D subframe reception section,
wherein the D2D subframe transmission section is defined based on a D2D subframe contained in D2D setting information about the serving eNB, and the D2D subframe reception section is defined based on the D2D subframe contained in the D2D setting information about the serving eNB.

**17.** The UE of claim 16, wherein the D2D subframe reception section is defined by considering a D2D subframe contained in D2D setting information about the neighboring eNB.

**18.** The UE of claim 16, wherein the control unit is further configured to receive information about the D2D subframe transmission section of the UE and information about the D2D subframe reception section of the UE through at least one signal of a system information block, an upper layer signal, and a physical layer signal.

FIG. 1

FIG. 2

EP 3 021 614 A1

FIG. 3

FIG. 4

EP 3 021 614 A1

FIG. 5

```
┌─────────────────────────────────────┐
│        START ENB OPERATION          │ ～501
└─────────────────────────────────────┘
                  │
                  ▼
┌─────────────────────────────────────┐
│   OBTAIN NEIGHBORING CELL INFORMATION │ ～502
└─────────────────────────────────────┘
                  │
                  ▼
┌─────────────────────────────────────┐
│        PERFORM SIGNALING OF          │ ～503
│    NEIGHBORING CELL INFORMATION      │
└─────────────────────────────────────┘
                  │
                  ▼
┌─────────────────────────────────────┐
│        FINISH ENB OPERATION          │ ～504
└─────────────────────────────────────┘
```

## FIG. 6A

```
┌─────────────────────────┐
│    START UE OPERATION    │ ~601
└─────────────────────────┘
             │
             ▼
┌─────────────────────────┐
│   RECEIVE CURRENT CELL   │ ~602
│   SIGNALING INFORMATION  │
└─────────────────────────┘
             │
             ▼
┌──────────────────────────────┐
│ OBTAIN NEIGHBORING CELL       │ ~603
│ INFORMATION                   │
└──────────────────────────────┘
             │
             ▼
        604
    ◇─────────────────────◇         YES
    │ NEIGHBORING CELL    │──────────────────┐
    │ DETECTED?           │                  │
    ◇─────────────────────◇                  ▼
             │ NO                          605
             │              ◇─────────────────────────◇
             │         YES  │ D2D SUBFRAME DEFINED    │
             │◄─────────────│ IN NEIGHBORING CELL AT  │
             │              │ TRANSMISSION OF D2D     │
             │              │ DISCOVERY SIGNAL?       │
             │              ◇─────────────────────────◇
             │                        │ NO
             │                        ▼          606
             │              ┌──────────────────────────────┐
             │              │ CONTROL D2D DISCOVERY SIGNAL  │
             │              │ POWER                         │
             │              └──────────────────────────────┘
             │                        │          607
     608     ▼                        ▼
┌──────────────────────────┐ ┌──────────────────────────┐
│ TRANSMIT D2D DISCOVERY   │ │ TRANSMIT D2D DISCOVERY   │
│ SIGNAL                   │ │ SIGNAL                   │
└──────────────────────────┘ └──────────────────────────┘
             │                        │
             │◄───────────────────────┘
             ▼
┌──────────────────────────┐
│   FINISH UE OPERATION    │ ~609
└──────────────────────────┘
```

FIG. 6B

651

SERVING CELL

652

NEIGHBORING CELL

653

CELL D2D SETTING INFORMATION

FIG. 7

EP 3 021 614 A1

# FIG. 8

| START ENB OPERATION | ~801 |

↓

| DEFINE D2D RELATED INFORMATION | ~802 |

↓

| PERFORM SIGNALING OF D2D RELATED INFORMATION | ~803 |

↓

| FINISH ENB OPERATION | ~804 |

# FIG. 9

```
┌─────────────────────────────┐
│      START UE OPERATION      │~901
└─────────────────────────────┘
              │
              ▼
         ╱╲ 902
        ╱  ╲         YES
  ╱────────────╲──────────────────┐
  ╲ NEIGHBORING ╱                 │
  ╲ CELL DETECTED?╱               │
    ╲──────────╱                  ▼
         │NO            ┌──────────────────────┐903
         │             │ RECEIVE NEIGHBORING CELL │
         │             │  SIGNALING INFORMATION   │
         │             └──────────────────────┘
         │                        │
         │                        ▼
         │             ┌──────────────────────┐904
         │             │ OBTAIN NEIGHBORING CELL INFORMATION │
         │             └──────────────────────┘
         │                        │
         │                        ▼
         │                   ╱╲ 905
         │        YES       ╱  ╲
         │◄────────────────╱ D2D SUBFRAME DEFINED ╲
         │                 ╲ IN NEIGHBORING CELL AT TRANSMISSION ╱
         │                 ╲ OF D2D DISCOVERY SIGNAL? ╱
         │                      ╲──────╱
         │                        │NO      906
         │                        ▼
         │             ┌──────────────────────┐
         │             │ CONTROL D2D DISCOVERY SIGNAL POWER │
         │             └──────────────────────┘
         │                        │
         ▼  908                   ▼  907
┌──────────────────────┐  ┌──────────────────────┐
│ TRANSMIT D2D DISCOVERY │  │ TRANSMIT D2D DISCOVERY │
│        SIGNAL          │  │        SIGNAL          │
└──────────────────────┘  └──────────────────────┘
         │                        │
         │◄───────────────────────┘
         ▼
┌──────────────────────┐
│    FINISH UE OPERATION │~909
└──────────────────────┘
```

FIG. 10

# FIG. 11

```
┌─────────────────────────────┐
│     START UE OPERATION       │──── 1101
└─────────────────────────────┘
              │
              ▼
┌─────────────────────────────┐
│ RECEIVE CURRENT CELL D2D     │──── 1102
│ INFORMATION                  │
└─────────────────────────────┘
              │
              ▼
┌─────────────────────────────┐
│ RECEIVE NEIGHBORING CELL D2D │──── 1103
│ INFORMATION                  │
└─────────────────────────────┘
              │
              ▼
        ╱───────────╲  1104           YES
       ╱ DOES UE EXIST ╲───────────────────────┐
       ╲  IN HANDOVER  ╱                        │
        ╲  REGION?   ╱                          ▼
         ╲─────────╱                      ╱──────────────╲  1105
              │ NO                       ╱ OVERLAP PART OF ╲
              │           NO            ╱  D2D SUBFRAME     ╲
              │◄─────────────────────── ╲ BETWEEN SERVING   ╱
              │                          ╲ CELL AND         ╱
              │                           ╲ NEIGHBORING    ╱
              │                            ╲   CELL?      ╱
              │                             ╲──────────╱
              │                                  │ YES
              ▼                                  ▼
┌─────────────────────────────┐  1106  ┌─────────────────────────────┐  1107
│ SELECT D2D DISCOVERY SIGNAL  │        │ SELECT DISCOVERY SIGNAL      │
│ TRANSMISSION RESOURCE FROM   │        │ TRANSMISSION RESOURCE FROM   │
│ SERVING CELL D2D SUBFRAME    │        │ OVERLAP PART OF D2D SUBFRAME │
└─────────────────────────────┘        │ BETWEEN SERVING CELL AND     │
              │                         │ NEIGHBORING CELL             │
              │                         └─────────────────────────────┘
              │                                  │
              │◄─────────────────────────────────┘
              ▼
┌─────────────────────────────┐
│ RECEIVE D2D DISCOVERY SIGNAL │──── 1108
│ AT D2D SUBFRAME & TRANSMIT   │
│ DISCOVERY SIGNAL AT SELECTED │
│ RESOURCE                     │
└─────────────────────────────┘
              │
              ▼
┌─────────────────────────────┐
│     FINISH UE OPERATION      │──── 1109
└─────────────────────────────┘
```

FIG. 12

FIG. 13

START UE OPERATION — 1301

RECEIVE CURRENT CELL SIGNALING INFORMATION — 1302

RECEIVE NEIGHBORING CELL INFORMATION — 1303

1304
D2D SUBFRAME IDENTICAL BETWEEN SERVING CELL AND NEIGHBORING CELL?

NO

1305
TRANSMISSION ALLOWED AT NEIGHBORING CELL D2D SUBFRAME?

YES

1307
TRANSMIT D2D DISCOVERY SIGNAL AT SERVING CELL /NEIGHBORING CELL D2D SUBFRAME

YES

NO

1306
TRANSMIT D2D DISCOVERY SIGNAL AT SERVING CELL D2D SUBFRAME

RECEIVE D2D DISCOVERY SIGNAL AT SERVING CELL/NEIGHBORING CELL D2D SUBFRAME — 1309

TRANSMIT/RECEIVE D2D DISCOVERY SIGNAL AT SERVING CELL D2D SUBFRAME — 1308

FINISH UE OPERATION — 1310

EP 3 021 614 A1

# FIG. 14

```
┌─────────────────────────────┐
│     START ENB OPERATION      │──── 1401
└─────────────────────────────┘
              │
              ▼
┌─────────────────────────────┐
│     DEFINE CURRENT CELL D2D  │──── 1402
└─────────────────────────────┘
              │
              ▼
┌─────────────────────────────┐
│   OBTAIN NEIGHBORING CELL D2D│──── 1403
│      SETTING INFORMATION     │
└─────────────────────────────┘
              │
              ▼
┌─────────────────────────────┐
│    DEFINE D2D TX/RX SECTION  │──── 1404
└─────────────────────────────┘
              │
              ▼
┌─────────────────────────────┐
│    PERFORM SIGNALING OF D2D  │──── 1405
│   TX/RX SECTION INFORMATION  │
└─────────────────────────────┘
              │
              ▼
┌─────────────────────────────┐
│      FINISH UE OPERATION     │──── 1406
└─────────────────────────────┘
```

# FIG. 15

START UE OPERATION — 1501

↓

RECEIVE D2D TX/RX SECTION
INFORMATION SIGNALING — 1502

↓

TRANSMIT DISCOVERY SIGNAL
AT D2D TX SECTION — 1503

↓

RECEIVE DISCOVERY SIGNAL
AT ENTIRE D2D RX SECTION — 1504

↓

FINISH UE OPERATION — 1505

FIG. 16

TRANSCEIVER UNIT — 1610

CONTROL UNIT — 1620

ENB-RELATED INFORMATION MANAGER — 1621

FIG. 17

TRANSCEIVER UNIT 1710

CONTROL UNIT 1720

POWER CONTROLLER 1721

## INTERNATIONAL SEARCH REPORT

| International application No. |
|---|
| **PCT/KR2014/006335** |

**A. CLASSIFICATION OF SUBJECT MATTER**

*H04W 48/08(2009.01)i, H04W 52/04(2009.01)i*

According to International Patent Classification (IPC) or to both national classification and IPC

**B. FIELDS SEARCHED**

Minimum documentation searched (classification system followed by classification symbols)
H04W 48/08; H04B 7/26; H04W 72/12; H04J 11/00; H04W 72/04; H04W 92/18; H04W 52/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: D2D|M2M|MTC, subframe|subframe, power|power, control|control, discovery|discovery

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0038804 A (LG ELECTRONICS INC.) 18 April 2013<br>See abstract, claims 1-10 and figure 28 | 1-18 |
| A | US 2013-0058289 A1 (PARK, Gi Won et al.) 07 March 2013<br>See abstract, claims 1-7 and figure 5 | 1-18 |
| A | KR 10-2012-0074254 A (ELECTRONICS AND TELECOMMUNICATIONS RESEARCH INSTITUTE) 05 July 2012<br>See abstract, claims 1-6 and figures 3-5 | 1-18 |
| A | KR 10-2012-0074251 A (ELECTRONICS AND TELECOMMUNICATIONS RESEARCH INSTITUTE) 05 July 2012<br>See abstract, claims 1-2, 9-10 | 1-18 |

| ☐ Further documents are listed in the continuation of Box C. | ☒ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br><br>29 SEPTEMBER 2014 (29.09.2014) | Date of mailing of the international search report<br><br>**29 SEPTEMBER 2014 (29.09.2014)** |
|---|---|
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |

Form PCT/ISA/210 (second sheet) (July 2009)

**INTERNATIONAL SEARCH REPORT**
Information on patent family members

International application No.

**PCT/KR2014/006335**

| Patent document cited in search report | Publication date | Patent family member | Publication date |
|---|---|---|---|
| KR 10-2013-0038804 A | 18/04/2013 | CN 102823167 A | 12/12/2012 |
| | | EP 2550760 A2 | 30/01/2013 |
| | | JP 05-567153B2 | 06/08/2014 |
| | | JP 2013-521740A | 10/06/2013 |
| | | US 2012-0329400 A1 | 27/12/2012 |
| | | WO 2011-118993 A2 | 29/09/2011 |
| | | WO 2011-118993 A3 | 26/01/2012 |
| US 2013-0058289 A1 | 07/03/2013 | CN 102984787 A | 20/03/2013 |
| | | EP 2566262 A1 | 06/03/2013 |
| | | EP 2566262 B1 | 04/06/2014 |
| | | JP 2013-055658 A | 21/03/2013 |
| KR 10-2012-0074254 A | 05/07/2012 | US 2014-0023008 A1 | 23/01/2014 |
| | | WO 2012-091420 A2 | 05/07/2012 |
| | | WO 2012-091420 A3 | 04/10/2012 |
| KR 10-2012-0074251 A | 05/07/2012 | US 2012-0163252 A1 | 28/06/2012 |

Form PCT/ISA/210 (patent family annex) (July 2009)